# EUROPEAN PATENT APPLICATION

(11) **EP 1 256 878 A2**
(43) Date of publication of application: **13.11.2002**
(21) Application number: 02004430.1
(22) Date of filing: 26.02.2002
(51) Int. Cl.: G06F 11/34

(54) **Information processing system, integrated information processing system, method for calculating execution load, and computer program**

(30) Priority: 27.02.2001 JP 2001053208; 31.01.2002 JP 2002024692
(71) Applicant: Sony Computer Entertainment Inc., Tokyo 107-0052 (JP)
(72) Inventor: Ebihara, Hitoshi, Shinagawa-ku, Tokyo 141-0001 (JP)
(74) Representative: Müller - Hoffmann & Partner

(57) **Abstract**

A graphics processing system comprises a graphics processor (2) for carrying out an image processing, a control processor (1) for use in producing a draw ready signal to enable the image processing, and a time counter (3) for use in determining a process time for the image processing. The graphics processor (2) begins execution of the image processing in response to the reception of the draw ready signal and produces a draw complete signal upon completion of the image processing. The draw complete signal represents the completion of the image processing. The time counter (3) begins determination of the execution load in response to the reception of the draw ready signal and terminates the determination in response to the reception of the draw complete signal. This makes it possible to determine the process time from the beginning and to the end of the drawing.

## Description

The present invention relates to a method and a system for a real-time presentation to an operator of execution loads of image processing in, for example, a graphics processor.

With the advancement of processing systems such as computers, an environment where more sophisticated information processing than before is performed using such processing systems has been improved. Two or more processing systems are cooperated with each other to achieve a single processing. For example, a large-scaled video display may be produced by a number of image processing systems cooperated with each other. However, the throughput or performance as the whole cannot fully be demonstrated even if the individual processing systems have a higher processing capability. In other words, what is required is to distribute execution loads among all processing systems involved in the operation to balance the execution loads on all systems. The execution load is the load at the time of performing processing.

For example, a large-scaled video display may be produced by a number of image processing systems that cooperate with each other. In such a case, it is controlled that the images are produced at the same timing from all processing systems. However, a processing system may be delayed or cannot complete its allocated task(s) in time before the refresh of a display device to produce the images when the system is over the capacity. In such a case, the system may drop some frames to display the image in a timely manner. This is typically called "frame dropping". The frame-dropping results in loss of image data and the video image will appear "jumpy" and incomplete. A solution for this problem is to extend the interval between the images displayed. However, this produces an rather unnatural motion. As apparent from the above, even a single processing system that is over capacity may cause rough video images.

With this respect, contents are tuned so that the execution load can be balanced among two or more processing systems to avoid the above-mentioned problems in the creation stage of the contents to be processed.

Conventionally, tuning of the contents involves examination of an event or a phenomenon caused during an actual operation performed by the processing system. Based on the results of the examination, an operator makes an assumption about which processing system would be suffered from overloading. The examination and the assumption completely rely on the operator such as a person who create the contents. The operator, however, cannot determine in an quantitative manner what execution load should be assigned to each processing system. For this reason, tuning of the contents is time consuming.

Accordingly, the demand lies in a method for determining the execution load of each processing system quantitatively. The execution load of the processing system can be correctly measured in a quantitative manner by means of counting the number of polygons and the number of pixels to be drawn, when for example, the processing system is an image processing system. However, it is necessary to provide the image processing system with an additional structure or mechanism to determine the number of polygons and the number of pixels, which is not practical.

A major object of the present invention is to provide a method and a system for the easy determination of the state of the execution loads in an information processing system.

In order to solve the above-mentioned problems, the present invention provides an information processing system, an integrated information processing system comprising a plurality of the information processing systems, a method for calculating execution loads, and a computer program.

An information processing system according to the present invention comprises processing means (2) for carrying out a predetermined information processing, means (1) for producing an execution enabling signal to causing said processing means (2) to carry out the information processing, and load determination means (3) for determining an execution load associated with the information processing.

The processing means (2) is adapted to begin execution of the information processing in response to the reception of the execution enabling signal and to produce an execution termination signal upon completion of the information processing. The execution termination signal represents the completion of the information processing. The load determination means (3) is adapted to begin determination of the execution load in response to the reception of the execution enabling signal and to terminate the determination in response to the reception of the execution termination signal.

Another information processing system according to the present invention comprises processing means (2) for use in executing an information processing having two or more steps, the information processing being carried out one step after another in a successive manner, means (1) for producing an execution enabling signal at a predetermined cycle in order to make the processing means (2) execute the information processing step by step, and load determination means (3) for determining an execution load associated with the information processing for each of the steps. The processing means (2) is adapted to begin execution of the information processing for one step each time when the processing means (2) receives the execution enabling signal. The processing means (2) is also adapted to produce an execution termination signal upon completion of the information processing in question, the execution termination signal representing the completion of the information processing. The load determination means (3) is adapted to begin determination of the execution load in response to the reception of the execution enabling signal and to terminate the determination in response to the reception of the execution termination signal.

In the information processing system described above may further comprise presentation means (M1-M4,G1-G16) for providing a real-time presentation to a user a measurement of the execution load determined by the load determination means (3).

The load determination means (3) may clear a previous measurement of the execution load already determined in response to the reception of the execution enabling signal and to begin determination of a new measurement. With this configuration, the load can be determined for each unit of processing or for each step.

A yet another information processing system according to the present invention comprises processing means (2) for carrying out a predetermined information processing, means (1) for producing an execution enabling signal to causing said processing means (2) to carry out the information processing, and load determination means (3) for determining an execution load associated with the information processing.

In this information processing system, the processing means (2) is adapted to supply a first enable signal and a second enable signal selectively to the load determination means (3) in response to the execution enabling signal, the first enable signal enabling execution of the information processing and representing an active state of execution where the information processing is carried out, the second enable signal representing an inactive state of execution where the information processing is not carried out. The load determination means (3) is adapted to determine a measurement of an execution load when the load determination means (3) receives the first enable signal and to inactivate the measurement when the load determination means (3) receives the second enable signal.

In this information processing system, the load determination means (3) may be configured to produce a value representing the execution load obtained through the measurement when the first enable signal is changed to the second enable signal.

Alternatively, the load determination means (3) may be configured to reset a previous measurement of the execution load already determined and begin the measurement when the second enable signal is changed to the first enable signal. With this configuration, the load can be determined for each unit of processing.

In these information processing systems, the execution load can be determined during the execution of the information processing carried out by the processing means (2). A user can be provided with information about the execution loads on the basis of the quantitative measurements. The user can also check quantitatively how much resource is left for the processing means and whether there is any processing means (2) that is possibly overloaded.

In these information processing systems, when the processing means (2) operates in response to clock signals, the execution load can be determined with the load determination means (3) counting the number of the clock signals from the beginning of the information processing to the end thereof.

The load determination means may comprise presentation means (M1-M4,G1-G16) of which presentation form varies in real time depending on the measurement of the load obtained. The presentation means (M1-M4,G1-G16) is used to provide a user with a presentation of the execution load of the processing means (2). The presentation means (M1-M4,G1-G16) may comprise a plurality of light-emitting components. In such a case, the presentation means (M1-M4,G1-G16) may vary the number of the light-emitting components to be lit depending on the value representing the execution load obtained through the measurement. Alternatively, the presentation means (M1-M4,G1-G16) may comprise a light-emitting component capable of emitting light beams of different colors. The presentation means (M1-M4,G1-G16) may vary the color of the light-emitting component depending on the value representing the execution load obtained through the measurement.

An integrated information processing system of the present invention has a plurality of the above-mentioned information processing systems, wherein each information processing system comprises processing means (4) and a presentation mechanism (M1-M4,G1-G16), the presentation mechanism (M1-M4,G1-G16) being for use in providing a real-time presentation of an execution load to a user, the execution load being associated with an information processing carried out by the processing means (4), the real-time presentation being made in accordance with a measurement determined in each of the information processing systems.

With such an integrated information processing system, This allows easy and fast tuning of the contents and/or programs such that the execution loads are balanced among all information processing systems.

In the integrated information processing system, the information processing systems may be housed in a housing and the presentation mechanism (M1-M4,G1-G16) may be arranged on the front surface of the housing in a corresponding relation with the processing means (4) of each information processing system. This allows quick determination of the execution loads of the processing means (4) in the information processing means.

A light-emitting component may be used as the presentation mechanism (M1-M4,G1-G16). The color or the number of the light-emitting components to be lit is varied to provide a presentation of the execution load with an aesthetic value.

A method for determining an execution load according to the present invention is a method for determining the execution load associated with an information processing by means of a system having processing means (2) for carrying out a predetermined information processing, means (1) for producing an execution enabling signal to causing said processing means to carry out the information processing, and load determination means (3) for determining the execution load associated with the information processing, wherein the processing means (2) begins the information processing in response to the reception of the execution enabling signal, the load determination means (3) begins determination of the load in response to the reception of the execution enabling signal, the processing means (2) produces an execution termination signal upon completion of the information processing, the execution termination signal representing the completion of the information processing, and wherein the load determination means (3) terminates the determination of the execution load in response to the reception of the execution termination signal supplied from the processing means (2) to produce a value of measurement obtained through the determination as the execution load.

Another method for determining the execution load according to the present invention is a method for determining the execution load associated with an information processing by means of a system having processing means (2) for use in executing an information processing having two or more steps, the information processing being carried out one step after another in a successive manner, means (1) for producing an execution enabling signal at a predetermined cycle in order to make the processing means (2) execute the information processing step by step, and load determination means (3) for determining an execution load associated with the information processing for each of the steps, wherein the processing means (2) begins execution of the information processing for one step each time when the processing means (2) receives the execution enabling signal and produces an execution termination signal upon completion of the information processing in question, the execution termination signal representing the completion of the information processing, the load determination means (3) begins determination of the execution load each time when the load determination means (3) receives the execution enabling signal and terminates the determination when the load determination means (3) receives the execution termination signal from the processing means (2) to produce a value of measurement obtained through the determination as the execution load.

A computer program of the present invention is a computer program used to establish, on a computer, processing means (2) for carrying out a predetermined information processing, means (1) for producing an execution enabling signal to causing said processing means (2) to carry out the information processing, and load determination means (3) for determining an execution load associated with the information processing, the computer program being for use in making the processing means (2) begin execution of the information processing in response to the reception of the execution enabling signal and produce an execution termination signal upon completion of the information processing, the execution termination signal representing the completion of the information processing, the computer program also being for use in making the load determination means (3) begin determination of the execution load in response to the reception of the execution enabling signal and terminate the determination in response to the reception of the execution termination signal. Such program is typically stored on a computer-readable data storage and installed into the computer during the configuration of the system.

The above and still further objects, features and advantages of the present invention will become apparent upon consideration of the following detailed description of a specific embodiment thereof, particularly when taken in conjunction with the accompanying drawings in which:
Fig. 1 is a block diagram of an information processing system;
Fig. 2 is a view illustrating a reference table;
Fig. 3 is a timing diagram illustrating a flow of determining an execution load;
Fig. 4 is a timing diagram illustrating another flow of determining an execution load;
Fig. 5 is a block diagram of an integrated graphics processing system;
Fig. 6 is a block diagram of a graphics subsystem module (GSM);
Fig. 7A is a schematic perspective view of a housing in which an integrated graphics processing system is housed;
Fig. 7B is a view illustrating a indicator;
Fig. 8 is a flow chart illustrating a routine to determine an execution load of a graphics subsystem module (GSM); and
Fig. 9 is a flow chart illustrating a routine to determine an execution load of a graphics subsystem block (GSB).

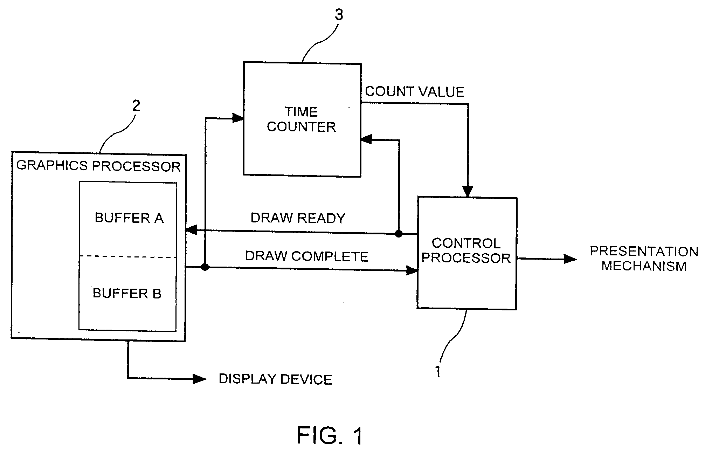

An embodiment of the present invention is described below in conjunction with a case where the present invention is applied to an information processing system for graphic images. As shown in Fig. 1, the information processing system comprises a control processor 1, a graphics processor 2, and a time counter 3. Each of the control processor 1, the graphics processor 2, and the time counter 3 may be stand-alone. Alternatively, they may be incorporated in a single system or apparatus as parts, components, or devices of such system or apparatus. In either case, the control processor 1, the graphics processor 2, and the time counter 3 operate in accordance with the same clock signals.

The graphics processor 2 receives a stream of image data from an input section (not shown). The graphics processor 2 processes, frame by frame, the stream of the image data to produce a frame image. The graphics processor 2 carries out an operation to display the frame image on a display device.

More specifically, the graphics processor 2 comprises a frame memory into which the frame image being displayed is drawn. The frame memory has a so-called "double buffer" configuration. As the name indicates, there are two buffers. The double buffering allows for one image to be drawn while another is being displayed. More specifically, the graphics processor 2 carries out geometry processing (coordinate conversion) and rendering (drawing) to load a frame image into an off-screen buffer, such as a buffer A, in response to a draw ready signal (process enable signal) from the control processor 1. When the frame image is complete in the off-screen buffer A, the graphics processor 2 supplies to the control processor 1 a draw complete signal (execution termination signal) indicating that the frame image is complete. Then, an operation is performed to change the off-screen buffer A to on-screen. The previous on-screen buffer, such as a buffer B, becomes off-screen. The on-screen buffer A is used to refresh a display screen while the off-screen buffer B is used to load the next frame image. The buffers thus continue exchanging their roles.

The time counter 3 is provided with the draw ready signal transmitted from the control processor 1 to the graphics processor 2 and with the draw complete signal transmitted from the graphics processor 2 to the control processor 1. The time counter 3 measures a time interval between the reception of the draw ready signal and the reception of the draw complete signal.

The draw ready signal and the draw complete signal are each considered to be produced when it goes "LOW" or "HIGH" for one clock period. The measured time interval is informed to the control processor 1 as an execution cycle for each frame image processed by the graphics processor 2. The execution cycle is provided to the control processor 1 as a count value. The time counter 3 may be a clock counter that resets a time count value and begins counting of the clocks in response to the draw ready signal and terminates the counting in response to the draw complete signal. While the time counter 3 is illustrated as an independent component in Fig. 1, it may be incorporated in the control processor 1 or in the graphics processor 2.

In order to ensure that the frame images are alternately drawn in the frame memories (double buffers), the control processor 1 supplies the draw ready signal to the graphics processor 2. The draw ready signal may be, for example, a synchronous signal (V-SYNC).

The control processor 1 calculates an execution time in a given frame relative to the maximum time interval available for processing of a predetermined one frame, that is, a ratio of the time count value received from the time counter 3. The ratio is calculated as a "usage rate". The control processor 1 performs control operations to exhibit, as a measurement of the execution, the usage rate to a user through a presentation mechanism. The usage rate can be obtained by means of dividing the time count value by an output interval of the draw ready signals.

The presentation mechanism in this event may be a light-emitting component such as a display device, light-emitting diode (LED) or a speaker. The control processor 1 indicates the state of the execution load in a real-time manner by means of, for example, providing different display images on the display device, changing the color or luminance of the light-emitting component, lighting a predetermined number of a plurality of light-emitting components, or altering the volume of the sound from the speaker, depending on the state of the execution load.

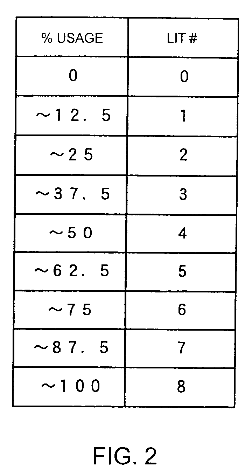

For the presentation purpose, the control processor 1 has a reference table as shown in Fig. 2. The illustrated reference table is for indicating the execution load with eight light-emitting components. The reference table provides a one-to-one correspondence between the usage rate and the number of the light-emitting components to be lit. For example, no light-emitting component is lit (lighting number = 0) when the graphics processor 2 does not perform the image processing (usage rate of 0%). Four light-emitting components are lit for the usage rate of 45%.

The reference table may be varied widely depending on the type of the presentation mechanism used. For the display device used as the presentation mechanism, the usage rate is associated with modes of display (e.g., motion of a video image, display pattern, or color). The usage rate is associated with different levels of volume or tone of the sound when the presentation mechanism is a speaker. A similar rule applies to any other presentation mechanisms.

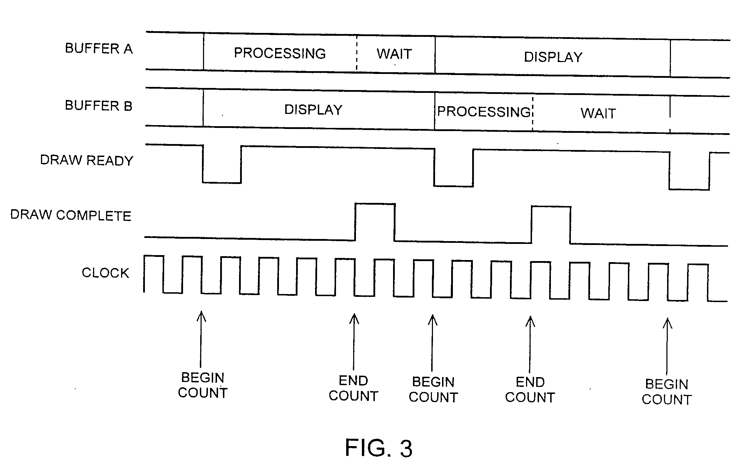

Referring to Fig. 3, an operation to determine the state of the execution load of the graphics processor 2 in the information processing system is described. It is assumed that the buffer A is used to refresh the display device and the buffer B is used to assemble the next frame image.

In response to the draw ready signal supplied from the control processor 1, the time counter 3 resets the time count value and begins measurement of a processing time for each frame. The graphics processor 2 changes the buffers in response to the reception of the draw ready signal. The graphics processor 2 provides the image in the buffer B on the display device and generates a frame image through image processing such as geometry processing. The graphics processor 2 draws the resulting frame image into the buffer A. After completion of loading of the frame image into the buffer A, the graphics processor 2 supplies the draw complete signal to the control processor 1. As shown in Fig. 3, the draw complete signal goes "HIGH" for one clock period to indicate that the signal is produced from the graphics processor 2. The time counter 3 terminates the measurement of the time when it determines the output of the draw complete signal. The time count value thus obtained indicates the time interval during which the graphics processor 2 performs the image processing, that is, the state of the execution load. The control processor 1 uses the reference table as shown in Fig. 2 to present the time count value to a user through the presentation mechanism used.

The above-mentioned operation is performed repeatedly for each frame to provide a real-time presentation of the latest execution load of the graphics processor 2 while showing an image on the display device. The indication of the execution load permits the user to keep track of how the image processing is performed while he or she looks at the images on the display device, providing the user with the information about the state of image processing. With that information, the user can create contents to fully exhibit the functionality of the graphics processor 2 and increase the performance of that graphics processor 2. The user can also tune his or her image processing program easily. The present invention offers significant benefits and excellent support for creating graphics-related contents or an image processing program expected to put a large load to a computer such as 3D image processing.

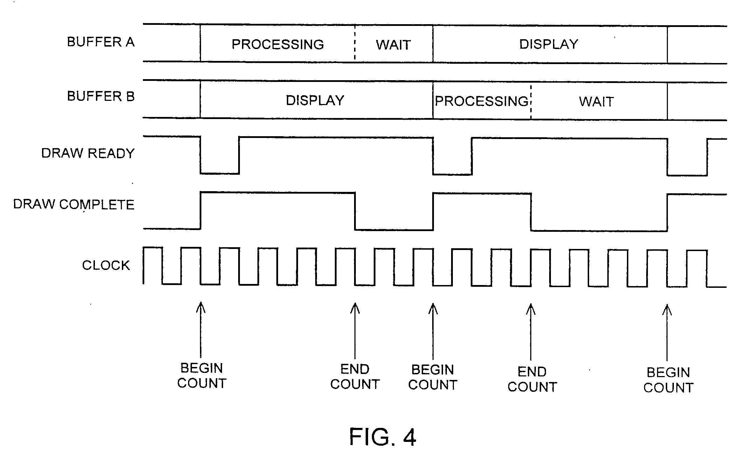

In the above-mentioned embodiment, the draw ready signal and the draw complete signal are used to indicate the start and end timings of the time measurement. However, only the draw complete signal may be used for this same purpose. More specifically, the draw complete signal may be in a "HIGH" state (first enable signal) for the time period when the image processing is performed and may be in a "LOW" state (second enable signal) for the time period when no image processing is performed, as shown in Fig. 4. The time counter 3 uses the draw complete signal as the enable signal to allow the measurement of the time when the draw complete signal is in the "HIGH" state. The draw complete signal is in the "HIGH" state during operation and goes to "LOW" at the time of completion of the operation. The time counter 3 is enabled for the measurement of the time only during the operation of the graphics processor 2.

In this case, the time count value is reset in response to the reception of the draw ready signal by the time counter 3. With the draw complete signal "HIGH", the time counter 3 resets the time count value and begins the measurement of the time. With the draw complete signal "LOW", the time counter 3 terminates the measurement and supplies the time count value to the control processor 1.

In the above-mentioned embodiment, all features of the information processing system 1 are implemented with the control processor 1, the graphics processor 2 and the time counter 3. However, the features equivalent to all or some of these features may be implemented as a combination of a computer program according to the present invention and a general-purpose computer with an image processing capability. More specifically, a functional block corresponding to the control processor 1, the graphics processor 2 and the time counter 3 may be achieved through cooperation between a control program such as an operating system that runs on a computer and the above-mentioned computer program stored on a computer-accessible data storage such as a disk device or a semiconductor memory. The computer in question then serves as the information processing system according to the present invention. It is noted that the term "access to a data storage" as used herein includes both reading and writing of data to and from the data storage.

Next, a specific example of the information processing system according to the present invention is described. The present invention is applied to an integrated graphics processing system comprising a plurality of the above-mentioned information processing systems that serve as a graphics processor in this example. The integrated graphics processing system uses a plurality of graphics processors that are in cooperation with each other to support large-sized screen images, high quality images and full-dimensional images that are difficult to be produced by using a single graphics processor.

### <Configuration>

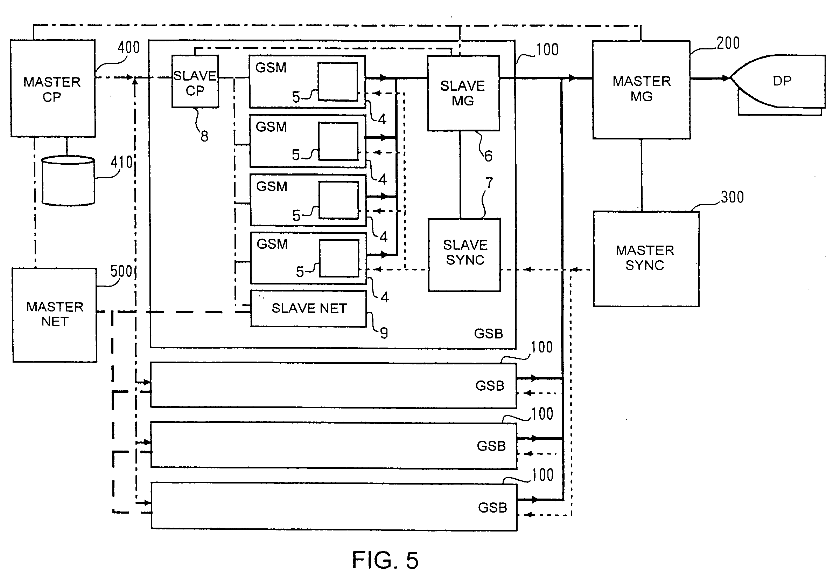

Fig. 5 shows an internal configuration of an integrated graphics processing system according to this example. The integrated graphics processing system comprises four graphics subsystem blocks (GSBs) 100 corresponding to the graphics processors, a merging unit (hereinafter, referred to as a "master MG") 200, a synchronous circuit (hereinafter, referred to as a "master SYNC") 300, a control processor (hereinafter, referred to as a "master CP") 400, and a network control circuit (hereinafter, referred to as a "master NET") 500. The master MG 200 is located at a subsequent stage of the GSBs 100 to merge outputs of the GSBs 100. The master SYNC 300 is connected to the GSBs 100 and the master MG 200. The master SYNC 300 supplies a synchronous signal (V-SYNC) and the draw ready signal (DrawNext) to the GSBs 100 and supplies the draw complete signal from the GSBs 100 to the master MG 200. The master CP 400 controls the entire integrated graphics processing system in an integrated manner. The master NET is used to keep cooperation of all GSBs 100.

An output port of the master MG 200 is connected to a display device DP on which results of image processing performed by the integrated graphics processing system are provided in an integrated manner. The master MG 200 controls in cooperation with the master CP 400 a timing at which data are transmitted from the master SYNC 300 to each GSB 100 and a timing at which data are transmitted from each GSB 100 to the master MG 200. The master CP 400 is connected to the master MG 200, an external storage 410 and the master NET 500.

### <GSB>

The GSB 100 comprises four graphics subsystem modules (GSMs) 4, a merger (hereinafter, referred to as a "slave MG") 6, a synchronous circuit (hereinafter, referred to as a "slave SYNC") 7, a control processor (hereinafter, referred to as a "slave CP") 8, and a network control circuit (hereinafter, referred to as a "slave NET") 9. The GSM 4 produces a frame image corresponding to the image data received by the local GSM 4. The slave MG 6 receives the frame images from the GSMs 4 and merges them into a single merged frame image. The slave MG 6 supplies the merged frame image to a subsequent stage. The slave SYNC 7 supplies the V-SYNC and draw ready signals to each GSM 4 and transmits the draw complete signals received from the GSMs 4 to the master SYNC 300. The slave CP 8 controls the operations of the GSMs 4. The slave NET 9 is used to achieve cooperation of all GSMs 4 in the same GSB 100 and other GSB(s) 100. It is noted that the slave NET 9 may be eliminated when the master NET 500 has a function similar to that of the slave NET 9.

Each GSM 4 comprises a synchronous circuit (hereinafter, referred to as a "SYNC-GSM") 5. The V-SYNC and draw ready signals are supplied from the SYNC-GSM 5 to an internal circuit. The slave MG 6 and the master MG 200 each comprises a register where frame images to be produced are held temporarily. The slave CP 8 controls the operations of the entire GSB 100. The slave CP 8 comprises a demultiplexer (not shown) for distributing the received data as four data segments. The slave CP 8 distributes a stream of image data associated with a video image to be produced among four GSMs 4. The distribution may be performed in various ways depending on the type of the contents used in the present system. For example, a final image to be produced on the display device may be divided into four sections. Alternatively, layers forming the final image may be separated as four streams of image data. The image data for four frames may first be merged and divided into four different sections.

The slave NET 9 is a circuit for use in exchanging a whole or a part of the streams of image data among the GSBs 100. The passing of the streams of the image data is mainly for the purpose of balancing the processing load among the GSBs 100 in processing images. The merging operation performed by the slave MG 6 is in synchronism with the absolute time axis that controls the operations of the entire GSBs 100. In other words, a plurality of frame images received in synchronism with the absolute time axis are merged into a single merged frame image.

Each GSM 4 is supplied with the streams of image data (from the master CP 400 via the slave CP 8) and the V-SYNC and draw ready signals (from the master SYNC 300 via the slave SYNC 7). In response to the draw ready signal, the GSM 4 begins image processing for the current stream of the image data. The SYNC-GSM 5, the slave SYNC 7, and the master SYNC 300 each comprises a data register and a plurality of counters. Each counter has a register for holding a counted value. When a counted value reaches a predetermined limit, an interrupt request is generated. A first counter is provided for synchronizing the operations of the GSMs 4. The first counter is incremented on a falling edge of the received synchronous signal ("V-SYNC"). A second counter is an up-counter for the measurement of the time intervals of the V-SYNCs with high accuracy. The second counter is reset to zero each time the falling edge of the V-SYNC is detected.

The SYNC-GSM 5 comprises the time counter 3 shown in Fig. 1. The time counter 3 measures the execution load of the respective GSM 4 (the above-mentioned time count value). The SYNC-GSM 5 also comprises a reference table as shown in Fig. 2 and an arithmetic operation unit for use in calculating the usage rate from the time count values. The reference table is used by the presentation mechanism for the provision of the time count values that are obtained through the measurement by the time counter 3.

With the above-mentioned components, the SYNC-GSM 5 has features of the control processor 1 and the time counter 3 shown in Fig. 1 along with its original feature of supplying the V-SYNC and draw ready signals to the internal circuit. The slave SYNC 7 comprises an averaging unit, a reference table as shown in Fig. 2, and an arithmetic operation unit. The averaging unit receives the time count values from the SYNC-GSMs 5 to obtain an average of these time count values. The reference table in the slave SYNC 7 is used for the presentation of the average of the time count values by the presentation mechanism. The arithmetic operation unit is for use in calculating the usage rate from the time count values. The average of the time count values may be used as a quantified amount of the execution loads of the slave MG 6 or of the GSB 100.

### <GSM>

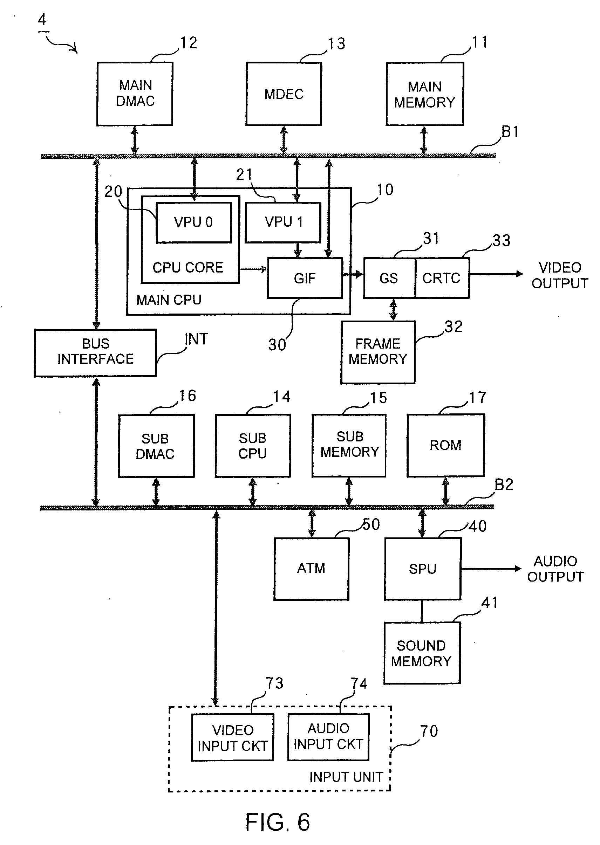

The GSM 4 operates at the timing of the V-SYNC in the SYNC-GSM 5. The GSM 4 begins image processing in response to the draw ready signal to produce a frame image corresponding to the stream of the image data. The image data forming the stream of the image data are read out of the external storage 410 connected to the master CP 400 and are subjected to a predetermined image processing into the frame image. The frame image is used to make it possible to produce images on the display device DP. After completion of the operation allocated to the local GSM 4, the GSM 4 supplies the processing result to the master MG 200 via the slave MG 6. The GSM 4 also supplies the draw complete signal to the master SYNC 300 via the SYNC-GSM 5 and the slave SYNC 7. Furthermore, the GSM 4 supplies the time count value to the slave MG 6 and the slave SYNC 7. The time count value represents the execution load of the local GSM 4 measured by the SYNC-GSM 5. As apparent from the above, the GSM 4 is at the center of the image processing in the integrated graphics processing system. Functional features of the GSM 4 according to this embodiment are shown in detail in Fig. 6.

In Fig. 6, the GSM 4 comprises a dual bus structure having a main bus B1 and a sub bus B2. The main bus B1 and the sub bus B2 are connected to each other via a bus interface INT. The bus interface INT allows communications between the main bus B1 and the sub bus B2. The main bus B1 is connected to a main central processing unit (CPU) 10, a main memory 11, a main direct memory access controller (DMAC) 12, a moving picture experts group (MPEG) decoder (MDEC) 13, a second vector processing unit (VPU1, also referred to as a "second VPU") 21, and a graphical synthesizer interface (GIF) 30. The main CPU 10 is a single-chip semiconductor device on which a microprocessor and a first vector processing unit (VPU0, also referred to as a "first VPU") 20 are mounted. The main memory 11 is formed of a random access memory (RAM). The GIF 30 serves as an arbiter between the first VPU 20 and the second VPU 21. The main bus B1 is also connected through the graphical synthesizer interface 30 to a graphics synthesizer (GS) 31 that serves as graphics processing means. The graphics synthesizer 31 is associated with a CRT controller (CRTC) 33 that produces video output signals.

An integrated semiconductor device may be used in view of size reduction of the system. In such a case, all or a part of the main memory 11, the main DMAC 12, the MDEC 13, the second VPU 21, the GIF 30, and the GS 31 are mounted on a single semiconductor chip. The main bus B1 connects the single-chip semiconductor device and the remaining components. The CRTC 33 sends the frame images to the slave MG 6.

When the integrated graphics processing system is turned on, the main CPU 10 loads a boot program from the ROM 17 on the sub bus B2 through the bus interface INT and starts executing the boot program to invoke the operating system. The main CPU 10 performs the geometry processing, in cooperation with the first VPU 20, on three-dimensional object data. For example, the main CPU 101 performs the geometry processing on coordinates of the vertexes of polygons making up a 3D object. The main CPU 10 comprises a fast memory called scratch pad RAM (SPR) that can store temporarily the result of the operation cooperatively performed with the first VPU 20.

The first VPU 20 comprises a plurality of arithmetic operation units that calculate a real part of a floating point number. The arithmetic operation units calculates the floating points in parallel. More specifically, the main CPU 10 and the first VPU 20 carry out the part of the arithmetic operation that requires a complicated geometry processing for each polygon. With this arithmetic operation, the main CPU 10 and the first VPU 20 create a display list. The display list includes polygon defining information such as shading modes information and coordinates of the vertexes.

The polygon defining information is formed of drawing area defining information and polygon information. The drawing area defining information is used for defining a drawing area for a graphic image to be displayed. The drawing area defining information comprises offset coordinates of frame memory addresses for the drawing area and coordinates of a drawing clipping region that limits the effect of drawing operations. When the coordinates of a polygon to be drawn fall outside the clipping region, drawing of the corresponding portion of the polygon has no effect. The polygon information comprises information about the attributes of the polygon and information about the vertex. The information about the attributes of the polygon is used to specify either one of shading, alpha-blending, texture mapping, and texture mapping operation modes. The information about the vertex represents the color of the vertex as well as the coordinates of the polygon vertexes within the drawing area and within the texture region.

The second VPU 21 is similar to the first VPU 20. The second VPU 21 comprises a plurality of arithmetic operation units that calculate a real part of a floating point number. The arithmetic operation units calculates the floating points in parallel. The second VPU 21 generates a display list containing the results of the arithmetic operations.

The first VPU 20 and the second VPU 21 are similar in configuration to each other. However, they function as independent geometry engines that take different parts in the arithmetic operation. Typically, the first VPU 20 undertakes rather complicated calculations involving, for example, motion of an object (i.e., non-routine geometry processing). The second VPU 21 undertakes calculations of an object that is simple but requires a large number of polygons, such as a building on the background (i.e., routine geometry processing). The first VPU 20 carries out macroscopic operations along the video rates while the second VPU 21 is adapted to operate in synchronism with the GS 31. For this purpose, the second VPU 21 comprises a direct line connected to the GS 31. On the other hand, the first VPU 20 is in close cooperation with the microprocessor(s) in the main CPU in order to facilitate the programming of the complicated process.

The display lists generated by the first and second VPUs 20 and 21 are transferred to the GS 31 via the GIF 30. The GIF 30 arbitrates the transfer to the GS 31 of the display lists generated by the first and second VPUs 20 and 21. In this embodiment, the GIF 30 has a function to arrange the display lists to be ordered from highest priority to lowest and then transfer them to the GS 31 according to that priority. The information that represents the priority of the display list is typically described in a tag thereof when the VPUs 20 and 21 generate the display lists. However, the priority may be determined independently by the GIF 30.

The GS 31 has drawing contents stored therein. The GS 31 reads the relevant drawing context in accordance with the identification information for the graphics context contained in the display list supplied from GIF 30. The GS 31 then draws an object (polygon) into the frame memory 32 with the drawing context. This drawing process is called "rendering". The frame memory 32 may also be used as a texture memory. This means that the pixel images on the frame memory 32 may be placed on the surface of the polygon as textures.

The main DMAC 12 controls the DMA transfer of the data among the circuits connected on the main bus B1. The main DMAC 12 also controls the DMA transfer of the data among the circuits on the sub bus B2 as well in accordance with the status of the bus interface INT. The MDEC 13 operates in parallel with the main CPU 10 and decodes the data compressed in the Moving Picture Experts Group (MPEG) format or the Joint Photographic Experts Group (JPEG) format.

The sub bus B2 is connected to a sub CPU 14 containing a microprocessor, a sub memory 15 formed of a random-access memory (RAM), a sub DMAC 16, a read-only memory (ROM) 17 on which programs such as the operating system are stored, a sound processing unit (SPU) 40, an ATM communication controller 50, and an input section 70. The sound processing unit 40 reads audio data out of a sound memory 41 and produces it as an audio output. The ATM communication controller 50 controls transmission of data through a network. The SYNC-GSM 5 is connected to the sub bus B2 while the slave NET 9 is connected to the ATM communication controller 50. The input section 70 comprises a video input circuit 73 and an audio input circuit 74. The video and audio input circuits 73 and 74 are used to receive image/video data and sound/audio data, respectively, from an external device.

In this embodiment, the stream of the image data is received from the slave CP 8 (branched from the master CP 400) through the video input circuit 73. The sub CPU 14 carries out the necessary operations in accordance with the programs stored in the ROM 17. The sub DMAC 16 controls the DMA transfer of the data among the circuits on the main bus B2 only when the bus interface INT separates the main bus B1 and the sub bus B2.

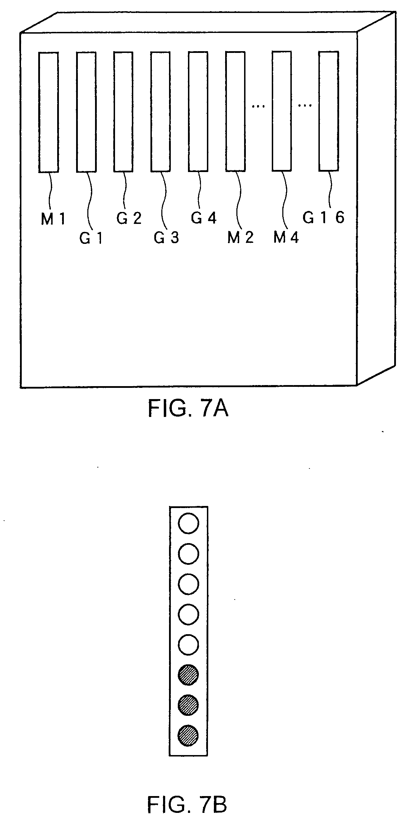

The integrated graphics processing system according to this embodiment having the above-mentioned configuration is contained in, for example, a housing as shown in Fig. 7A as a commercial product. The housing has indicators G1 to G16 and M1 to M4 provided on one surface thereof. The indicators are an embodied example of the presentation mechanism that allows visual indication of the execution loads of the GSMs 4 and the GSBs 100. The indicators G1 to G16 are connected to the GSMs 4 while the indicators M1 to M4 are connected to the GSBs 100.

Details of the indicators G1 to G16 and M1 to M4 are shown in Fig. Fig. 7B. In this example, the indicators G1 to G16 and M1 to M4 each has eight light-emitting components such as LEDs. The number of the light-emitting components to be lit is determined depending on the execution load (time count value). The indicators are configured as bar graph indicators to provide visual presentation of the execution loads. How many light-emitting components are to be lit for how much execution loads can be determined by using the reference table as shown in Fig. 2. In the example shown in Fig. 7B, three light-emitting components are lit. This state corresponds to the maximum load according to the reference table in Fig. 2. This is equivalent to 25% to 37.5% of the maximum usage rate of 100%.

The indicators G1 to G16 and M1 to M4 are not limited to the one shown in Fig. 7B. Instead, they may be achieved by using a single light-emitting component that can emit light beams of different colors. The colors of the light-emitting component may be varied depending on the execution loads.

### <Practical Application>

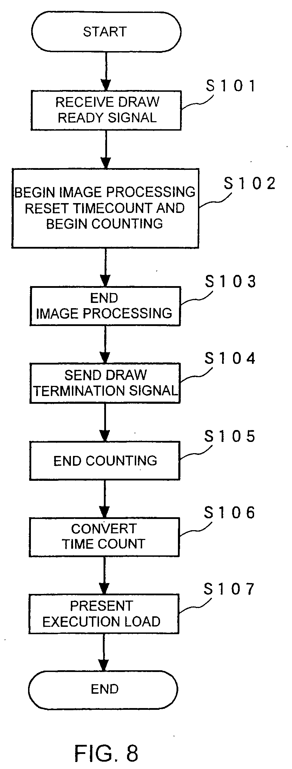

Next, how the execution loads of the GSMs 4 and the GSBs 100 can be presented is described in detail. Fig. 8 is a flow chart illustrating a routine to determine an execution load of the GSMs 4. The execution load of the single GSM 4 can be determined in the manner as described above. The parts of the GSMs 4 other than the SYNC-GSM 5 are equivalent to the graphics processor 2 in Fig. 1. The SYNC-GSM 5 corresponds to the control processor 1 and the time counter 3 in Fig. 1.

In Fig. 8, the GSM 4 receives by the SYNC-GSM 5 the V-SYNC and draw ready signals from the master SYNC 300 via the slave SYNC 7 and begins processing of the stream of the image data (step S101). The SYNC-GSM 5 resets the time count value in the time counter 3 in response to the draw ready signal and begins counting of the time interval. The GSM 4 carries out the processing of the stream of the image data (step S102). The GSM 4 then loads the frame image into the frame memory 32. After completion of the image processing, the GSM 4 supplies a draw termination signal to the master SYNC 300 via the SYNC-GSM 5 and the slave SYNC 7 (steps S103 and S104). The SYNC-GSM 5 terminates the counting of the time interval in response to the reception of the draw termination signal (step S105). After the counting of the time interval, the SYNC-GSM 5 calculates the above-mentioned usage rate from the time count value in the arithmetic operation unit. The SYNC-GSM 5 then determines, by using the reference table, the number of the light-emitting components to be lit based on the usage rate (step S106). The signal representing the number of the light-emitting components to be lit is supplied from the GSM 4 to the corresponding indicator. The indicators G1 to G16 activate the light-emitting component(s) according to the signal to provide the user with the information about the execution load of the GSM 4 in question (step S 107).

In the above-mentioned embodiment, the frame memory of the graphics processor 2 has a double buffer configuration. However, the GSMs 4 in the integrated graphics processing system are not necessarily required to support double buffering. A single buffer may equally be used. With the single buffer configuration, there is a waiting period between the completion of the loading of a frame image and reception of the subsequent V-SYNC signal. The type of the buffer does not affect the determination of the execution loads according to the present invention.

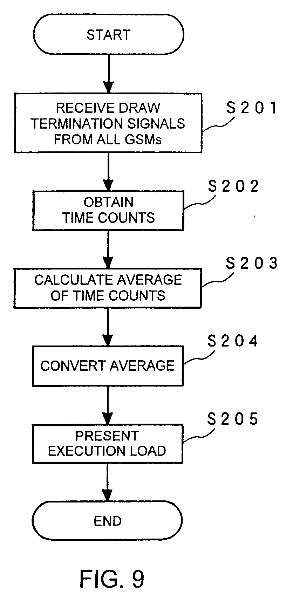

Next, how the execution loads of the GSBs 100 can be presented is described in detail with reference to Fig. 9. The slave SYNC 7 sends the V-SYNC and the draw ready signal to all GSMs in the GSB 100 where the sending slave SYNC 7 is located. The slave SYNC 7 then waits for the draw termination signals from all GSMs 4 involved. The slave SYNC 7 obtains the time count values from all GSMs 4 in response to the reception of the draw termination signals supplied from all GSMs 4 (steps S201 and S202). Simultaneous transmission of the draw termination signals hardly occurs from the GSMs 4. With this respect, the slave SYNC 7 may obtain the time count value from the corresponding GSM 4 each time when it receives the draw termination signal.

The slave SYNC 7 calculates an average of the time count values obtained from all GSMs 4 involved (step S203). The average can be obtained by means of dividing the sum of the time count values from the GSMs 4 by the number of the GSMs 4. This operation is performed by the arithmetic operation unit. The slave SYNC 7 calculates the usage rate from the calculated average and determines the number of the light-emitting components to be lit according to that average. In this event, the slave SYNC 7 uses the reference table as shown in Fig. 2 (step S204). The signal representing the number of the light-emitting components is supplied from the GSB 100 to the corresponding indicators M1 to M4. The indicators M1 to M4 activate the light-emitting components according to the signal to provide visual presentation of the execution load of the GSB 100 (step S205). The above-mentioned operation permits a real-time presentation of the execution loads of the corresponding GSMs 4 and GSBs 100 by using the indicators G1 to G16 and M1 to M4 provided on the surface of the housing as shown in Fig. 7A. Accordingly, it is easy for users of the integrated graphics processing system (such as those who create contents) to know the state of the execution loads according the number of the lighting indicators G1 to G16 and M1 to M4.

A creator typically produces different contents and programs for each of the different GSMs 4. For example, one GSM 4 may be used for producing hairs of a human. A second GSM 4 may be used for producing the body of the same human. Another GSM 4 may be used for the background. Such distributed processing of the contents permits more realistic images and graphics.

The execution load of the GSM 4 varies depending on the size of the images to be handled by that GSM 4. The heavier execution load is often required for a larger volume of images to be handled. When it is expected that the execution load becomes too heavy, some part of the operation may be allocated to any other GSM 4 having a much lighter load to balance the execution load among the GSMs 4.

The present embodiment makes it possible to check quickly the execution loads of the GSMs 4 and the GSBs 100 through the indicators G1 to G16 and M1 to M4. The execution loads are obtained not on the basis of assumption as in conventionally but on the basis of the quantitative measurements. The user can check quantitatively how much resource is left for the GSMs 4 and the GSBs 100. Alternatively, he or she can check whether there is any processes GSM or GSB that is possibly overloaded. This allows easy and fast tuning of the contents and/or programs such that the execution loads are balanced among the GSMs 4.

While the above description has thus been made in conjunction with the case where the present invention is applied to the image processing, the present invention may equally be applied to the processing of other kinds of data including production of audio data. With the present invention, delicate, high quality sounds such as orchestral sounds may be produced. In such a case, the data for the production of the sounds are separately handled by the GSMs 4. In addition, video processing may be combined with sound production for a more complicated processing of multimedia data. As shown in Fig. 6, the GSMs 4 of the present embodiment may be available for such processing. With the sound production, the sound data obtained are used as the signals to produce sounds through a predetermined speaker. The sound comes out through the speaker in synchronism with the frame images by the slave MG 6 and the master MG 200. The sound data are supplied to the GSMs 4 through the audio input circuit 74 shown in Fig. 6 while the sound data are produced through the SUP 40.

As apparent from the above, according to the present invention, the execution loads of the processing system can be presented to a user from the beginning to the end of the operation. This provides the user with the information about the execution loads.

This application is based on Japanese Patent Applications Nos. 2001-53208 filed on February 27, 2001 and 2002-24692 filed on January 31, 2002 and including specification, claims, drawings and summary. The disclosure of the above Japanese Patent Applications is incorporated herein by reference in its entirety.

## Claims

1. An information processing system comprising:
processing means (2) for carrying out a predetermined information processing;
means (1) for producing an execution enabling signal to causing said processing means (2) to carry out the information processing; and
load determination means (3) for determining an execution load associated with the information processing,
said processing means (2) being adapted to begin execution of the information processing in response to the reception of the execution enabling signal and to produce an execution termination signal upon completion of the information processing, the execution termination signal representing the completion of the information processing,
said load determination means (3) being adapted to begin determination of the execution load in response to the reception of the execution enabling signal and to terminate the determination in response to the reception of the execution termination signal.

2. An information processing system comprising:
processing means (2) for use in executing an information processing having two or more steps, the information processing being carried out one step after another in a successive manner;
means (1) for producing an execution enabling signal at a predetermined cycle in order to make said processing means (2) execute the information processing step by step; and
load determination means (3) for determining an execution load associated with the information processing for each of the steps;
said processing means (2) being adapted to begin execution of the information processing for one step each time when said processing means (2) receives the execution enabling signal, said processing means (2) also being adapted to produce an execution termination signal upon completion of the information processing in question, the execution termination signal representing the completion of the information processing,
said load determination means (3) being adapted to begin determination of the execution load in response to the reception of the execution enabling signal and to terminate the determination in response to the reception of the execution termination signal.

3. An information processing system as claimed in claim 1, further comprising presentation means (M1-M4,G1-G16) for providing a real-time presentation to a user a measurement of the execution load determined by said load determination means (3).

4. An information processing system as claimed in claim 2, further comprising presentation means (M1-M4,G1-G16) for providing a real-time presentation to a user a measurement of the execution load determined by said load determination means (3).

5. An information processing system as claimed in claim 1, wherein said load determination means (3) clear a previous measurement of the execution load already determined in response to the reception of the execution enabling signal and to begin determination of a new measurement.

6. An information processing system as claimed in claim 2, wherein said load determination means (3) clear a previous measurement of the execution load already determined in response to the reception of the execution enabling signal and to begin determination of a new measurement.

7. An information processing system comprising:
processing means (2) for carrying out a predetermined information processing;
means (1) for producing an execution enabling signal to causing said processing means (2) to carry out the information processing; and
load determination means (3) for determining an execution load associated with the information processing,
said processing means (2) being adapted to supply a first enable signal and a second enable signal selectively to said load determination means (3) in response to the execution enabling signal, the first enable signal enabling execution of the information processing and representing an active state of execution where the information processing is carried out, the second enable signal representing an inactive state of execution where the information processing is not carried out,
said load determination means (3) being adapted to determine a measurement of an execution load when said load determination means (3) receives the first enable signal and to inactivate the measurement when said load determination means (3) receives the second enable signal.

8. An information processing system as claimed in claim 7, wherein said load determination means (3) produce a value representing the execution load obtained through the measurement when the first enable signal is changed to the second enable signal.

9. An information processing system as claimed in claim 7, wherein said load determination means (3) clear a previous measurement of the execution load already determined and begin the measurement when the second enable signal is changed to the first enable signal.

10. An information processing system as claimed in claim 1, wherein said processing means (2) operates in response to clock signals, and wherein said load determination means (3) determines the execution load by means of counting the number of the clock signals from the beginning of the information processing to the end thereof.

11. An information processing system as claimed in claim 1, wherein said load determination means (3) comprises presentation means (M1-M4,G1-G16) of which presentation form varies in real time depending on the measurement of the load obtained.

12. An information processing system as claimed in claim 11, wherein said presentation means (M1-M4,G1-G16) comprises a plurality of light-emitting components, said presentation means (M1-M4,G1-G16) varying the number of the light-emitting components to be lit depending on the value representing the execution load obtained through the measurement.

13. An information processing system as claimed in claim 11, wherein said presentation means (M1-M4,G1-G16) comprises a light-emitting component capable of emitting light beams of different colors, said presentation means (M1-M4,G1-G16) varying the color of the light-emitting component depending on the value representing the execution load obtained through of the measurement.

14. An integrated information processing system having a plurality of information processing systems claimed in claim 1, wherein each information processing system comprises processing means (4) and a presentation mechanism (M1-M4,G1-G16), the presentation mechanism (M1-M4,G1-G16) being for use in providing a real-time presentation of an execution load to a user, the execution load being associated with an information processing carried out by the processing means (4), the real-time presentation being made in accordance with a measurement determined in each of the information processing systems.

15. An integrated information processing system as claimed in claim 14, wherein the information processing systems are housed in a housing, the presentation mechanism (M1-M4,G1-G16) being arranged on the front surface of the housing in a corresponding relation with the processing means (4) of each information processing system.

16. A method for determining an execution load associated with an information processing by means of a system having processing means (2) for carrying out a predetermined information processing, means (1) for producing an execution enabling signal to causing said processing means (2) to carry out the information processing, and load determination means (3) for determining the execution load associated with the information processing, wherein:
the processing means (2) begins the information processing in response to the reception of the execution enabling signal, the load determination means (3) begins determination of the load in response to the reception of the execution enabling signal, the processing means (2) produces an execution termination signal upon completion of the information processing, the execution termination signal representing the completion of the information processing, and wherein the load determination means (3) terminates the determination of the execution load in response to the reception of the execution termination signal supplied from the processing means (2) to produce a value of measurement obtained through the determination as the execution load.

17. A method for determining an execution load associated with an information processing by means of a system having processing means (2) for use in executing an information processing having two or more steps, the information processing being carried out one step after another in a successive manner, means (1) for producing an execution enabling signal at a predetermined cycle in order to make the processing means (2) execute the information processing step by step, and load determination means (3) for determining an execution load associated with the information processing for each of the steps, wherein:
the processing means (2) begins execution of the information processing for one step each time when the processing means (2) receives the execution enabling signal and produces an execution termination signal upon completion of the information processing in question, the execution termination signal representing the completion of the information processing,
the load determination means (3) begins determination of the execution load each time when the load determination means (3) receives the execution enabling signal and terminates the determination when the load determination means (3) receives the execution termination signal from the processing means (2) to produce a value of measurement obtained through the determination as the execution load.

18. A computer program used to establish, on a computer, processing means (2) for carrying out a predetermined information processing, means (1) for producing an execution enabling signal to causing said processing means (2) to carry out the information processing, and load determination means (3) for determining an execution load associated with the information processing, the computer program being for use in making the processing means (2) begin execution of the information processing in response to the reception of the execution enabling signal and produce an execution termination signal upon completion of the information processing, the execution termination signal representing the completion of the information processing, the computer program also being for use in making the load determination means (3) begin determination of the execution load in response to the reception of the execution enabling signal and terminate the determination in response to the reception of the execution termination signal.

19. A computer-readable data storage having the computer program claimed in claim 18 stored thereon.
